(19)

Europäisches
Patentamt

European
Patent Office

Office européen
des brevets

(11) EP 2 733 358 A1

(12) EUROPEAN PATENT APPLICATION

(43) Date of publication:
21.05.2014 Bulletin 2014/21

(51) Int Cl.:
F04D 13/00 (2006.01)        F04D 13/06 (2006.01)
F04D 15/00 (2006.01)        G01F 23/00 (2006.01)

(21) Application number: 12192713.1

(22) Date of filing: 15.11.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: ABB Oy
00380 Helsinki (FI)

(72) Inventors:
• Ahola, Jero
53850 Lappeenranta (FI)

• Tamminen, Jussi
53850 Lappeenranta (FI)
• Ahonen, Tero
53810 Lappeenranta (FI)

(74) Representative: Kolster Oy Ab
Iso Roobertinkatu 23
PO Box 148
00121 Helsinki (FI)

(54) **Method for approximating the static head downstream of a pump**

(57)    The present disclosure discloses a method and apparatus implementing the method for approximating a static head of a fluid transfer system comprising a fluid transfer device. The method comprises determining a rotational speed and a power consumption of the fluid transfer device, determining a first set of data points, calculating a second set of data points on the basis of the first set of data points, determining a minimum rotational speed producing flow through the fluid transfer device on the basis of the second set of data points, and determining the static head on the basis of the minimum rotational speed.

Figure 8

EP 2 733 358 A1

**Description**

FIELD OF THE INVENTION

The invention relates to fluid transfer systems and, more particularly to determination of the system static head and the related minimum applicable rotational speed for a fluid transfer device of the fluid transfer system.

BACKGROUND INFORMATION

Pumps, fans, and compressors are widely used in industrial and municipal applications. As pump, fan, and compressor applications consume a notable amount of electrical energy, they also hold large energy savings potential.
A variable which may have an effect on the savings potential in these applications is the static head of the system. The static head represents a pressure difference in the form of a vertical fluid column height which a fluid transfer device has to overcome in order to produce flow.
Information on the system static head may be required, for example, in energy audits, energy-efficiency-optimizing speed control of fluid transfer systems, and determination of rotational speed limits for the device.
The static head can be an important parameter for defining a minimum possible energy consumption of a fluid transfer device, such as a pump, a fan, or a compressor. For example, a system-specific energy consumption $E_s$ (kWh/m$^3$) of a fluid transfer system can be defined as follows:

$$E_s = \frac{\rho g \left( H_{st} + H_{dyn} \right)}{\eta_{dt} \eta_p} \ , \tag{1}$$

where $p$ is the fluid density, $g$ is the acceleration due to gravity, $H_{st}$ is the static head, $H_{dyn}$ is a system dynamic head caused by flow losses, $\eta_{dt}$ is the drive train efficiency, and $\eta_p$ is the device efficiency. Equation 1 shows the direct effect that $H_{st}$ has on the system specific-energy consumption $E_s$.
Energy efficiency of a fluid transfer system operation may be optimized by driving the fluid transfer device of the fluid transfer system at an optimal rotational speed with the smallest possible specific energy consumption, if allowed by the surrounding process [1]. The static head may affect the feasibility of a speed control method for a fluid transfer device [2], since the static head in the system curve may set a practical limit for the minimum applicable rotational speed.
The static head of a fluid transfer system can be determined by additional measurements [3]. However, sensors for the additional measurements may decrease cost-effectiveness of the system.
The static head of a fluid transfer system can also be determined without additional measurements by identifying the system curve parameters with a frequency converter [4]. This method has, however, relatively high computational requirements since it uses the least squares method for determining the system curve parameters.

BRIEF DISCLOSURE

An object of the present invention is to provide a method and an apparatus for implementing the method so as to alleviate the above disadvantages. The objects of the invention are achieved by a method and an apparatus which are characterized by what is stated in the independent claims. The preferred embodiments of the invention are disclosed in the dependent claims.
The disclosed method allows automatic determination of the system static head and the related minimum applicable rotational speed of a fluid transfer device in a fluid transfer system. The disclosed method is based on an analysis of a shaft torque or a power consumption of the fluid transfer device at different rotational speeds and determination of a rotational speed at which the fluid transfer device begins to provide flow into the system.
The rotational speed at which the fluid transfer device begins to provide flow may then be used together with characteristics curves of the fluid transfer device for identifying the static head of the fluid transfer system. The disclosed method can be carried out repeatedly, for example, during a startup and/or shutdown procedure of the system.
The disclosed method is well suited to be implemented on frequency converters. If the frequency converter provides, for example, estimates of the rotational speed and the shaft torque or the power consumption of a pump, the disclosed method can be implemented without additional sensors on the pump or its motor shaft. Possible internal data loggers and calculation capacity of the frequency converters can also be utilised in gathering data during the pump startup and in the determination of the system static head. In addition, the disclosed method has relatively low computational requirements, which allows a more cost-effective implementation.

## BRIEF DESCRIPTION OF THE DRAWINGS

In the following the invention will be described in greater detail by means of preferred embodiments with reference to the attached drawings, in which

Figure 1 illustrates an example of an effect the magnitude of static head can have on the operating point of a pump;
Figure 2 illustrates an exemplary effect a flow through a pump has on the power consumption;
Figure 3 illustrates pump power consumption at a certain static head level as a function of rotational speed;
Figure 4 illustrates a basic flow chart of an exemplary embodiment of the disclosed method;
Figure 5 illustrates an exemplary pumping system for which the disclosed method can be used;
Figure 6 illustrates an exemplary flow chart of gathering characteristics data at startup of a fluid transfer system;
Figure 7 illustrates an exemplary pumping system used for testing the disclosed method;
Figure 8 illustrates the shaft torque and the measured actual flow rate in the system of Figure 7 as functions of rotational speed; and
Figure 9 illustrates a rate of change of the pump shaft torque and a cumulative mean of the rate of change as a function of rotational speed.

## DETAILED DISCLOSURE

The static head can be an important parameter for defining a minimum possible energy consumption of a fluid transfer system. Information on the system static head may also be required for determination of rotational speed limits for the device. The present disclosure discloses a method for approximating a static head of a fluid transfer device of a fluid transfer system. The disclosure also discloses an apparatus for implementing the method.

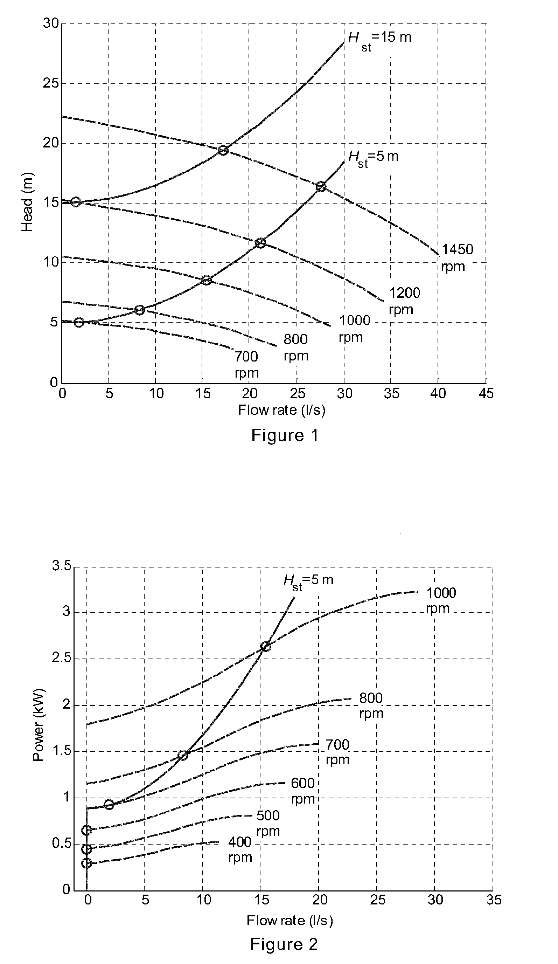

Figure 1 illustrates an example of an effect the static head may have on an operating point of a fluid transfer device and on a minimum rotational speed $n_{min}$ for producing flow through the fluid transfer device. In Figure 1, the dashed lines show $QH$ characteristics of the fluid transfer device at different rotational speeds. The solid lines show a total system head when the static head $H_{st}$ is 5 m and 15 m.

The operating point of the system is in the intersection of the present $QH$ characteristics curve and the present total system head curve. Some exemplary operating points are illustrated by small circles in Figure 1.

In Figure 1, the minimum rotational speed $n_{min}$ is around 700 rpm when the static head $H_{st}$ is 5 m. With the static head of 15 meters, the resulting $n_{min}$ is approximately 1200 rpm.

When the minimum rotational speed $n_{min}$ is known, the operation of the fluid transfer device at a harmful operating range with a higher risk for fluid recirculation and/or device stalling can be avoided.

The operation of a fluid transfer device can be divided into two different regions: operation without and with produced flow. When a system has a static head, the fluid transfer device starts to provide flow when a head $H$ produced by the fluid transfer device overcomes the static head $H_{st}$ of the fluid transfer system.

In the exemplary system of Figure 1, the rotational speed $n$ of the fluid transfer device should be at least 700 rpm in order to overcome the static head $H_{st}$ of 5 m. At lower speeds ($n < n_{min}$), the fluid transfer device is operating practically under the shutoff head conditions, meaning that the flow rate of the fluid transfer device remains at zero as the fluid recirculates in the fluid transfer device. Power consumption $P$ of the fluid transfer device should follow the related power consumption informed in the characteristic curves of the fluid transfer device.

If the power consumption of the fluid transfer device is only known at one speed, it can be approximated with a generic affinity law:

$$P_n = \left(\frac{n}{n_0}\right)^3 P_0 , \qquad\qquad (2)$$

where $P_0$ is a known power consumption at a known rotational speed $n_0$. These values may, for example, be published by the manufacturer of the fluid transfer device in the data sheet of the fluid transfer device.

On the basis of Equation (2), a derivative $\dfrac{dP}{dn}$ may be calculated:

$$\frac{dP}{dn} = \frac{3P_0}{n_0^3} n^2 , \tag{3}$$

where the rotational speed $n$ of the fluid transfer device is between 0 rpm and $n_{min}$.

Since the power consumption of the fluid transfer device is a product of the rotational speed $n$ and the shaft torque $T$ of the fluid transfer device, the shaft torque can also be used as an indicator for the power consumption. The generic affinity laws for torque and its derivative are:

$$T_n = \left(\frac{n}{n_0}\right)^2 T_0 , \tag{4}$$

$$\frac{dT}{dn} = \frac{2T_0}{n_0^2} n , \tag{5}$$

where $T_0$ is a known shaft torque of the fluid transfer device at the known rotational speed $n_0$.

The affinity laws are based on the Euler equation which does not consider the effect of fluid recirculation occurring especially at a flow rate of zero. Consequently, the actual behaviour of $\frac{dP}{dn}$ and $\frac{dT}{dn}$ may follow Equations (3) and (5) only approximately when the rotational speed is below $n_{min}$. However, Equations (3) and (5) can give adequate estimates of $\frac{dP}{dn}$ and $\frac{dT}{dn}$.

When the rotational speed of the fluid transfer device is sufficiently high to overcome the static head $H_{st}$, the fluid transfer device starts to produce flow. The flow rate depends on the operating point, i.e. the location of the intersection (the circles in Figure 1) of the fluid transfer device $QH$ characteristics curve and a total system head requirement $H_{sys}$. The total system head requirement $H_{sys}$ comprises the static head $H_{st}$ and flow-rate-dependent dynamic losses in the system (i.e. the dynamic head $H_{dyn}$) that may be quantified with a friction loss factor $k$:

$$H_{sys} = H_{st} + H_{dyn} ; \tag{6}$$

$$H_{dyn} = kQ^2 , \tag{7}$$

where Q is the flow rate.

The generic affinity law for head is:

$$H_n = \left(\frac{n}{n_0}\right)^2 H_0 . \tag{8}$$

When the rotational speed relationship in Equation (8) is replaced with the generic affinity law for flow rate, i.e.

$$\frac{n}{n_0} = \frac{Q_n}{Q_0} , \tag{9}$$

Equation (8) becomes

$$H_n = \frac{H_0}{Q_0^2} Q_n^2 . \tag{10}$$

Equations (7) and (10) have a similar form. Thus, the affinity laws can predict the location of the operating point and the power consumption at different rotational speeds when the system head requirement $H_{sys}$ only comprises the dynamic head $H_{dyn}$. Compared with the zero flow rate, a non-zero flow rate reduces the effect of the fluid recirculation phenomenon on the accuracy of the affinity laws.

However, if there is a static head in the system, the system head requirement as expressed in Equation (6) does not follow the generic affinity law of Equation (8). When the fluid transfer device starts to produce flow, the fluid transfer device power consumption no longer follows Equations (2) or (3) either. The dynamic head $H_{dyn}$ caused by the flow typically increases the fluid transfer device power consumption beyond the power consumption according to Equation (2) or (3).

Figure 2 illustrates an exemplary effect the flow rate $Q$ has on the power consumption $P$. A curve of operating points at the static head of 5 meters is illustrated with a solid line. The power consumption $P$ as a function of flow rate $Q$, i.e. the $QP$ characteristics, at different rotational speeds is illustrated with dashed lines. Operating points at the shown rotational speeds are marked with small circles.

In Figure 2, the power consumption approximately follows Equations (2) or (3) when the rotational speed is below 700 rpm. However, when the rotational speed exceeds 700 rpm, the fluid transfer device starts to provide flow. The flow resulting from the rotational speed causes an increase in the power consumption. Figure 2 shows a steepening, increasing slope in the power consumption when following the solid line curve for operating point locations. Consequently, the power consumption does not follow Equations (2) or (3) anymore.

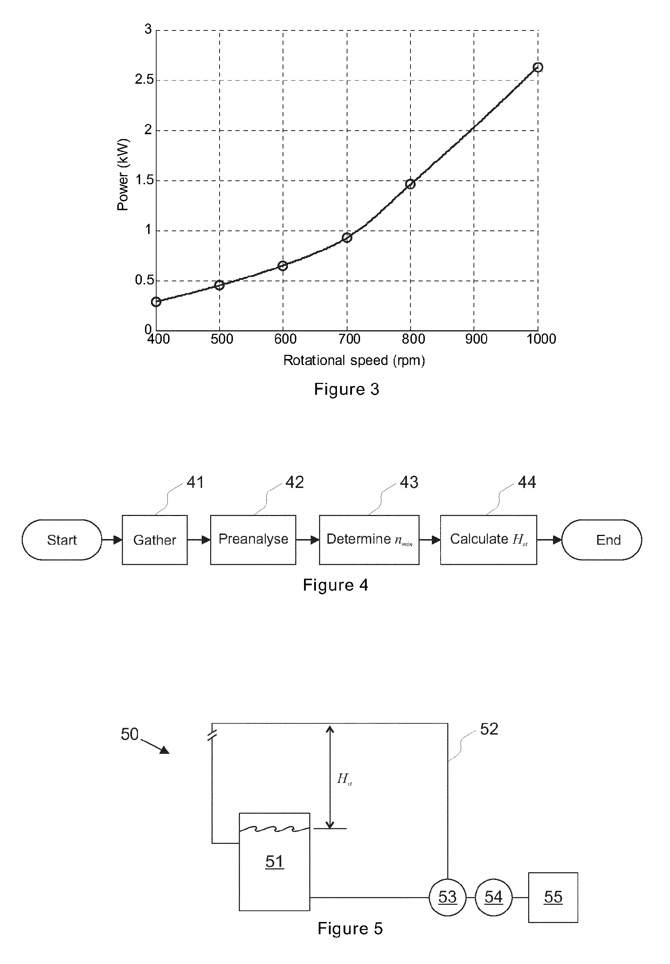

As a result of the increased power consumption, a change can be observed in the rate of change of the fluid transfer device power consumption as a function of rotational speed. The location of this change can be used for indicating the minimum rotational speed $n_{min}$ of the fluid transfer device. Figure 3 illustrates the power consumption in Figure 2 at static head level of 5 m as a function of rotational speed. A clearly visible change in the slope, i.e. $dP/dn$, of the power consumption can be seen at 700 rpm which is the rotational speed at which the fluid transfer device starts to produce flow.

The static head can then be determined on the basis of the minimum rotational speed $n_{min}$. The static head can, for example, be determined by first determining a shutoff head at a selected speed. The shutoff head may, for example be given by the manufacturer on a data sheet of the fluid transfer device. After determining the shutoff head, the static head can be calculated on the basis of the shutoff head, the minimum rotational speed, and the affinity laws.

The shaft torque or the power consumption of the fluid transfer device may be studied during a steady state. In this manner, they are not significantly affected by a fluid acceleration requirement or other transients. This may be realized, for example, by starting the fluid transfer device with a slow speed ramp or by increasing the rotational speed in small steps (e.g. 100 rpm). The previously introduced principles also hold true during the shutdown of the fluid transfer device. Consequently, the system static head can be identified during the startup and/or shutdown of the fluid transfer device by using the disclosed method.

The disclosed method may be divided into four stages. Figure 4 illustrates an exemplary flow chart of the disclosed method.

In the first stage 41, characteristics data of a fluid transfer system may be gathered. This can be accomplished, for example, by determining a rotational speed and power consumption of the fluid transfer device, and storing a first set of data points. A data point of the first set represents power consumption at a rotational speed. The characteristics data can be gathered during the startup and/or the shutdown, for example.

In the second stage 42, the gathered data may be pre-analysed. For example, a second set of data points may be calculated on the basis of the first set of data points. A data point of the second set may represent a rate of change of the power consumption at a rotational speed.

In the third stage 43, the minimum rotational speed producing flow through the fluid transfer device may be determined on the basis of the second set of data points.

In the fourth stage 44, the system static head $H_{st}$ is determined on the basis of the minimum rotational speed $n_{min}$.

Figure 5 illustrates a simplified exemplary fluid transfer system in the form of a pumping system, for which the disclosed method can be used. The pumping system 50 comprises a container 51, a circulation system 52, a pump 53 connected to the circulation system 52, a motor 54 rotating the pump 53, and a frequency converter 55 powering the motor 54.

In Figure 5, the startup and/or shutdown characteristics of the pumping system 50 are gathered by the frequency converter 55 in the first stage of the disclosed method. In Figure 5, the frequency converter 55 may be used for determining a rotational speed and power consumption of the pump 53 during the startup. The frequency converter 55 may, for example, estimate the rotational speed and power consumption of the pump 53. Alternatively, a torque of the pump 53 can be used as an indicator for the power consumption. On the basis of the measured rotational speed and power consumption, the frequency converter 55 may store a first set of data points, wherein a data point of the first set represents power consumption at a rotational speed.

The startup may be performed out by increasing the rotational speed of the pump 53 stepwise so that the estimation of the power consumption can be carried out during the steady state after each rotational speed step. For example, a step of 50 to 100 rpm may be used in Figure 5. In order to accurately determine the minimum rotation speed $n_{min}$ from the gathered data, the stepwise increments may cover such a range that the minimum rotation speed $n_{min}$ can be assumed to fall within the range.

The startup may also be carried out by using a slow ramp that allows determination of the power consumption of the pump 53 in its steady state, and by storing the power consumption as a function of rotational speed.

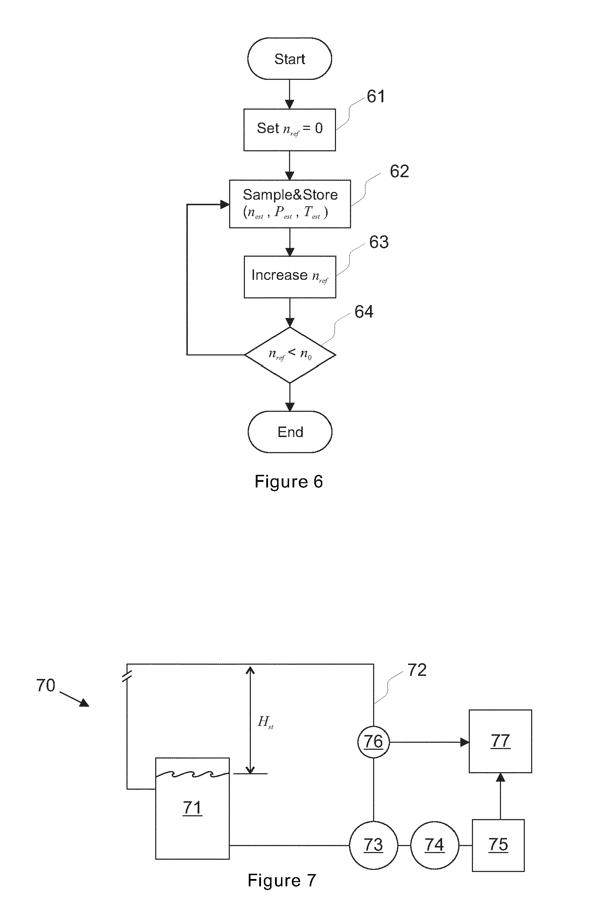

Figure 6 illustrates an exemplary flow chart of gathering characteristics data at the startup of the system in Figure 5. In Figure 6, the rotational speed of the pump 53 is controlled on the basis of a speed reference $n_{ref}$.

In the first step 61, the pump 53 is started with the speed reference $n_{ref}$ set to zero.

In the second step 62, the frequency converter 55 estimates the rotational speed $n_{est}$ and power consumption $P_{est}$ of the pump 53. The estimates are then stored.

Next, in the third step 63, the rotational speed reference $n_{ref}$ is increased. The increase can be stepwise or it can be in the form of a ramp.

In the fourth step, the rotational speed reference $n_{ref}$ is compared with a set limit $n_0$. The limit $n_0$ may be set such that the minimum rotation speed $n_{min}$ can be assumed to be lower that the set limit $n_0$.

If the rotational speed reference $n_{ref}$ is below the set limit $n_0$, the procedure is repeated, starting from the second step 62. If the rotational speed reference $n_{ref}$ is not below the set limit $n_0$, the procedure is ended.

After a sufficient amount of characteristics data has been gathered in the first stage of the disclosed method, the second stage of the disclosed method may be initiated. In the second stage, the gathered data is pre-analysed. For example, in the system of Figure 5, the frequency converter 55 calculates a second set of data points on the basis of the first set of data points. Each data point in the second set represents a rate of change of the power consumption at the rotational speed of a corresponding data point in the first set.

The disclosed method may, for example, calculate a rate of change, i.e. a derivate, $\dfrac{dP}{dn}$ of the power consumption. In the second set of data, the derivate $\dfrac{dP}{dn}$ can be calculated for each rotational speed of the first set. Calculating the second set of data points may comprise, for example, selecting a first data point $P_m, n_m$ and a sequentially adjacent second data point $P_{m-1}, n_{m-1}$ from the first set, calculating a power consumption difference $P_m - P_{m-1}$ between the power consumptions of the first and the second data point, and calculating a rotational speed difference $n_m - n_{m-1}$ between the rotational speed of the first and the second data point. The derivate $\dfrac{dP}{dn}$ can then be calculated by dividing the power consumption difference by the rotational speed difference:

$$\frac{dP}{dn} = \frac{P_m - P_{m-1}}{n_m - n_{m-1}}, \qquad\qquad (11)$$

where the subscript $m$ denotes is an index of the selected data point. Alternatively, a rate of change $\dfrac{dT}{dn}$ of the torque

can be calculated, in the similar manner as in Equation 11:

$$\frac{dT}{dn} = \frac{T_m - T_{m-1}}{n_m - n_{m-1}} .$$

(12)

In the system of Figure 5, the third stage may be initiated when the characteristics data has been pre-analysed and the second set of data points has been formed. In the third stage, the minimum rotational speed $n_{min}$ producing flow through the pump 53 is determined on the basis of the second set of data points.

For each data point in the second set, a cumulative average can be calculated of the rate of change on the basis of previous data points. The minimum rotational speed $n_{min}$ may be determined according to the $\frac{dT}{dn}$ of converter estimates at different rotational speeds.

On the basis of the previous explanation and Equation (5), $\frac{dT}{dn}$ should form a direct line when the rotational speed of the pump 53 is not sufficient for producing flow. As the affinity laws may possibly give somewhat inaccurate predictions, $\frac{dT}{dn}$ may even remain constant at rotational speeds below $n_{min}$. However, a change in $\frac{dT}{dn}$ should be notable when the pump 53 begins to produce flow.

The change in the rate of change can be detected for instance by calculating the cumulative mean (average) of $\frac{dT}{dn}$ and by comparing the rate of change $\frac{dT}{dn}$ of the each data point with the cumulative average.

If the difference between the rate of change of the each data point and the cumulative average exceeds a set limit, the rotational speed of the present data point may be used as the minimum rotational speed. For example, if an individual $\frac{dT}{dn}$ is twice the cumulative mean value, the respective rotational speed indicates $n_{min}$ of the pump 53.

Determination of the minimum rotational speed $n_{min}$ may also be performed on the basis of gathered pump power consumption estimates, i.e. by finding a rotational speed with a notable change in $\frac{dP}{dn}$ .

When the minimum rotational speed $n_{min}$ producing flow has been determined in the exemplary system of Figure 5, the corresponding system static head $H_{st}$ may be calculated on the basis of the minimum rotational speed $n_{min}$ in the the fourth stage of the disclosed method.

It can be assumed that the operation of the pump 53 at the minimum rotational speed $n_{min}$ results in a pump head $H$ that corresponds with the system static head $H_{st}$, since the produced flow rate $Q$ is zero (or very close to it).

In the exemplary system of Figure 5, a shutoff head $H_{so}$ at a selected rotational speed $n_0$ is determined on the basis of a $QH$ characteristic curve or a shutoff head (i.e. the pump head at a zero flow rate) published by the manufacturer. The shutoff head $H_{so}$ is then inputted to the frequency converter 55. Then, the system static head $H_{st}$ may be calculated, for example, on the basis of the shutoff head $H_{so}$, the minimum rotational speed $n_{min}$, the selected speed $n_0$, and the affinity laws:

$$H_{st} = \left( \frac{n_{min}}{n_0} \right)^2 H_{so} .$$

(13)

In the exemplary system of Figure 5, the frequency converter 55 may act as means for implementing the four stages of the disclosed method. However, implementation of the disclosed method is not restricted to implementations on the frequency converter. The frequency converter may also be used as a mere source of measurement information. For example, the disclosed method can be implemented on a separate apparatus, such as a programmable logic controller (PLC), an FPGA or a microprocessor, that has access to the estimates ($n_{est}$ and $T_{est}/P_{est}$) of the frequency converter 55 and has capability to control the operation of the pump 53. The exemplary system of Figure 5 comprises the pump 53 as means for generating flow, but the disclosed method works correspondingly with blowers, fans, and compressors, as their operation principles and system characteristics are quite similar to those of pumps.

The disclosed method was tested with an exemplary pumping system. Figure 7 illustrates a simplified schematic of the pumping system. The pumping system comprised a water container 71, a water circulation system 72, a pump 73 connected to the water circulation system 72, a motor 74 rotating the pump 73, and a frequency converter 75 powering the motor 74.

In the exemplary pumping system of Figure 7, the water circulation system 72 produced a static head $H_{st}$ of approximately 5.6 meters during the test. THe accurate magnitude of the static head $H_{st}$ was affected by the amount of water in the container 71.

The pump 73 was a Sulzer APP22-80 centrifugal pump with a shutoff head $H_{so}$ of 22 m at the rotational speed $n_0$ of 1450 rpm.

The motor 74 was an ABB 11 kW induction motor, and the frequency converter 75 was an ABB ACS800 frequency converter. The frequency converter 75 provided estimates for the pump rotational speed $n_{est}$, shaft torque $T_{est}$ and power consumption $P_{est}$.

The circulation system 72 was equipped with sensors 76 allowing measurement of the actual flow rate $Q$ and head $H$ of the pump 73. The measurement sensors 76 and the frequency converter 75 were connected to a measurement computer 77, which allowed the reading and storing of the signals coming from the sensors 76 and the frequency converter 75.

In the first stage of the test, the rotational speed and the power consumption of the pump 73 were determined, and a first set of data points was gathered. Each data point in the first set represented the power consumption at a rotational speed. The pump 73 was driven at selected rotational speeds ranging from 0 to 1100 rpm. At each rotational speed, the estimates of the rotational speed, torque and power consumption produced by the frequency converter 75 were stored in the computer 77. At the same time, readings from the sensors 76 were stored in the computer 77.

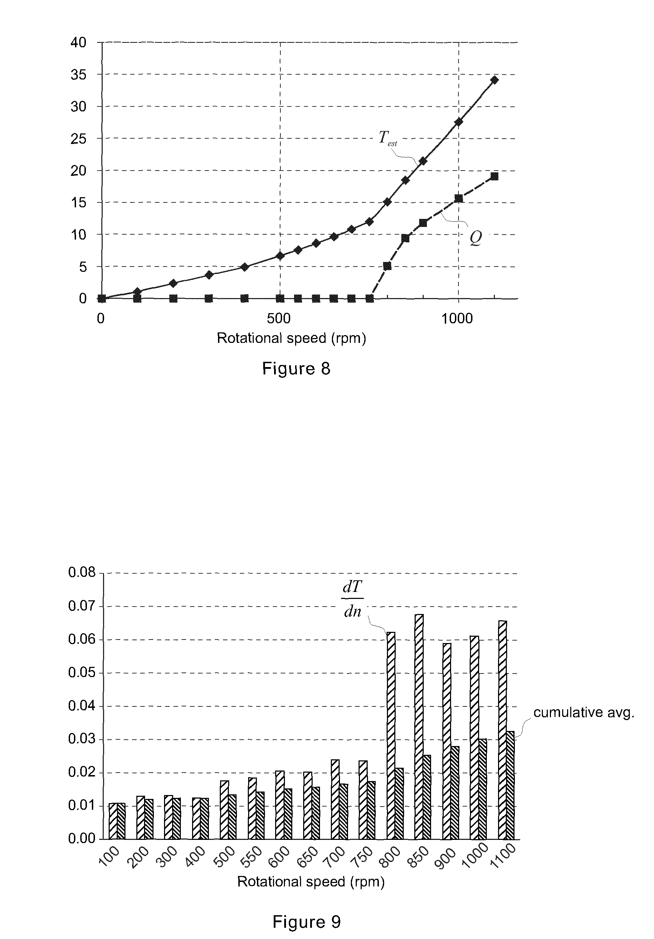

In Figure 8, the shaft torque $T_{est}$ and the measured actual flow rate $Q$ are shown as functions of rotational speed $n_{est}$. The pump 73 started to produce flow when the rotational speed $n_{est}$ was between 750 and 800 rpm. In this region, the slope of the shaft torque $T_{est}$ also became steeper.

In the second stage, a second set of data points was calculated on the basis of the first set of data points. Each data point in the second set represented a rate of change of the power consumption at the rotational speed of the data point of the first set. A rate of change $\dfrac{dT}{dn}$ of the shaft torque was calculated for each rotational speed.

In the third stage, a minimum rotational speed was determined on the basis of the second set of data points. The cumulative mean (average) of $\dfrac{dT}{dn}$ was calculated. The minimum rotational speed $n_{min}$ allowing the production of flow was then detected by comparing $\dfrac{dT}{dn}$ with its cumulative mean value.

Figure 9 illustrates the rate of change $\dfrac{dT}{dn}$ of the pump shaft torque and the cumulative mean of the rate of change $\dfrac{dT}{dn}$ as a function of rotational speed $n_{est}$. Figure 9 shows that there was a notable increase in $\dfrac{dT}{dn}$ compared to its cumulative mean (average) when the pump started to produce flow. In this case, $n_{min}$ was assumed to be between 750 and 800 rpm.

In the final, fourth step of the test, the static head $H_{st}$ was determined on the basis of the minimum rotational speed. Based on the known shutoff head $H_{so}$ at 1450 rpm and Equation (13), the estimated system static head was approximated to be between 5.9 and 6.7 meters.

The estimation accuracy of the $H_{st}$ was affected, among others, by the accuracy of shutoff head $H_{so}$ information for the pump 73 and the speed interval used in gathering the startup or shutdown characteristics.

Although there was a slight difference between the actual (5.6 m) and estimated (5.9-6.7 m) static head $H_{st}$, the disclosed method provided a feasible result for the static head and the related minimum applicable rotational speed $n_{min}$.

It will be obvious to a person skilled in the art that the inventive concept can be implemented in various ways. The invention and its embodiments are not limited to the examples described above but may vary within the scope of the claims.

REFERENCES

[1] Jero Ahola, Tero Ahonen and Jussi Tamminen, Method and apparatus for optimizing energy efficiency of pumping system, European patent application EP11195777.5.
[2] Europump and Hydraulic Institute, Variable speed pumping - A guide to successful applications, ISBN 1-85617-449-2.
[3] Yasumoto Koji and Yoshida Satoshi, Measuring device of pump discharge flow, Japanese patent JP3168386 (A).
[4] Tero Ahonen, Jero Ahola and Jussi Tamminen, Method in connection with a pump driven with a frequency converter and frequency converter, European patent application EP2354556 (A1).

**Claims**

1. A method for approximating a static head of a fluid transfer system comprising a fluid transfer device, wherein the method comprises
   determining a rotational speed and a power consumption of the fluid transfer device,
   determining a first set of data points, wherein a data point of the first set represents a power consumption at a rotational speed,
   calculating a second set of data points on the basis of the first set of data points, wherein a data point of the second set represents a rate of change of the power consumption at the rotational speed of the data point of the first set,
   determining a minimum rotational speed producing flow through the fluid transfer device on the basis of the second set of data points, and
   determining the static head on the basis of the minimum rotational speed.

2. A method as claimed in claim 1, wherein a torque of the fluid transfer device is used as an indicator for the power consumption.

3. A method as claimed in claim 1 or 2, wherein calculating the second set of data points comprises
   selecting a first data point and a sequentially adjacent second data point from the first set,
   calculating a power consumption difference between the power consumption of the first and the second data point,
   calculating a rotational speed difference between the rotational speed of the first and the second data point,
   dividing the power consumption difference by the rotational speed difference.

4. A method as claimed in any one of the preceding claims, wherein determining a minimum rotational speed comprises,
   for each data point in the second set,
   calculating a cumulative average of the rate of change on the basis of previous data points,
   comparing the rate of change of the each data point with the cumulative average, and
   if the difference between the rate of change of the each data point and the cumulative average exceeds a set limit,
   using the rotational speed of the each data point as the minimum rotational speed.

5. A method as claimed in any one of the preceding claims, wherein determining the static head comprises
   determining a shutoff head at a selected speed, and
   calculating the static head on the basis of the shutoff head, the minimum rotational speed, the selected speed, and the affinity laws.

6. A method as claimed in claim 5, wherein the static head is calculated by multiplying the shutoff head by a square of a ratio between the minimum rotational speed and the selected rotational speed.

7. An apparatus for approximating a static head of a fluid transfer system comprising a fluid transfer device, wherein the apparatus comprises means configured to
   determine a rotational speed and a power consumption of the fluid transfer device,
   determine a first set of data points, wherein a data point of the first set represents a power consumption at a rotational speed,
calculate a second set of data points on the basis of the first set of data points, wherein a data point of the second set represents a rate of change of the power consumption at the rotational speed of the data point of the first set,
determine a minimum rotational speed producing flow through the fluid transfer device on the basis of the second set of data points, and
determine the static head on the basis of the minimum rotational speed.

Figure 1

Figure 2

Figure 3

Figure 4

Figure 5

Start

Set $n_{ref} = 0$    — 61

Sample&Store
$(n_{est}, P_{est}, T_{est})$    — 62

Increase $n_{ref}$    — 63

$n_{ref} < n_0$    — 64

End

Figure 6

70

$H_{st}$

72

71

76 → 77

73    74    75

Figure 7

Figure 8

Figure 9

Europäisches
Patentamt

European
Patent Office

Office européen
des brevets

## EUROPEAN SEARCH REPORT

Application Number

EP 12 19 2713

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/067116 A1 (ANDERSON ROBB G [US] ET AL) 20 March 2008 (2008-03-20) <br> * paragraphs [0021], [0026] - [0034]; figures 17, 18,19 * <br> ----- | 1-7 | INV. <br> F04D13/00 <br> F04D13/06 <br> F04D15/00 <br> G01F23/00 |

TECHNICAL FIELDS
SEARCHED      (IPC)

F04D
G01F

The present search report has been drawn up for all claims

| Place of search | Date of completion of the search | Examiner |
|---|---|---|
| The Hague | 8 May 2013 | Brouillet, Bernard |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT**
**ON EUROPEAN PATENT APPLICATION NO.**                    EP 12 19 2713

08-05-2013

| Patent document cited in search report | Publication date | Patent family member(s) | | Publication date |
|---|---|---|---|---|
| US 2008067116 A1 | 20-03-2008 | CA | 2685246 A1 | 06-11-2008 |
| | | EP | 2156007 A1 | 24-02-2010 |
| | | US | 2008067116 A1 | 20-03-2008 |
| | | US | 2010150737 A1 | 17-06-2010 |
| | | US | 2011106452 A1 | 05-05-2011 |
| | | US | 2012195770 A1 | 02-08-2012 |
| | | US | 2012283950 A1 | 08-11-2012 |
| | | WO | 2008134278 A1 | 06-11-2008 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 11195777 A
- JP 3168386 A
- EP 2354556 A1